(19) **Europäisches Patentamt**

**European Patent Office**

**Office européen des brevets**

(11) Veröffentlichungsnummer: **0 379 086 B1**

(12) **EUROPÄISCHE PATENTSCHRIFT**

(45) Veröffentlichungstag der Patentschrift: **11.05.94**

(51) Int. Cl.⁵: **C08F 285/00**, C08L 27/06, //(C08L27/06,51:00)

(21) Anmeldenummer: **90100617.1**

(22) Anmeldetag: **12.01.90**

(54) **Emulsionscopolymerisate.**

(30) Priorität: **19.01.89 DE 3901448**

(43) Veröffentlichungstag der Anmeldung:
**25.07.90 Patentblatt 90/30**

(45) Bekanntmachung des Hinweises auf die
Patenterteilung:
**11.05.94 Patentblatt 94/19**

(84) Benannte Vertragsstaaten:
**BE DE ES FR GB IT NL SE**

(56) Entgegenhaltungen:
**FR-A- 2 139 458**
**US-A- 3 458 603**
**US-A- 4 173 600**

(73) Patentinhaber: **BASF Aktiengesellschaft**
**Carl-Bosch-Strasse 38**
**D-67063 Ludwigshafen(DE)**

(72) Erfinder: **Hungenberg, Klaus-Dieter, Dr.**
**Ortsstrasse 135**
**D-6943 Birkenau(DE)**
Erfinder: **Oschmann, Werner, Dr.**
**Buergermeister-Horlacher-Strasse 44**
**D-6700 Ludwigshafen(DE)**

**Beschreibung**

Die vorliegende Erfindung betrifft Emulsionscopolymerisate, erhältlich durch

A Emulsionspolymerisation von 5 - 50 Gew.-% eines Monomerengemischs aus

$a_1$) 50 - 99,99 Gew.-% Styrol oder dessen kernsubstituierten Derivaten (Monomere I)

$a_2$) 0,01 - 5 Gew.-% eines aliphatischen konjugierten Diens mit bis zu 6 C-Atomen (Monomere II)

$a_3$) 0 - 49,99 Gew.-% eines $C_1$-$C_{12}$-Alkylesters der Acrylsäure oder der Methacrylsäure (Monomere III)

$a_4$) 0 - 10 Gew.-% eines bi- oder polyfunktionellen nicht konjugierten Monomeren (Monomere IV)

$a_5$) 0 - 5 Gew.-% weiterer radikalisch polymerisierbarer Monomere (Monomere V),

wobei sich die Gew.-% $a_1$) - $a_5$) auf die Gesamtmenge (= 100 %) der in Stufe A eingesetzten Monomere beziehen,

B. anschließende Polymerisation von 15 - 45 Gew.-% eines Monomerengemischs aus

$b_1$) 80 - 99,99 Gew.-% eines Acrylsäureesters (Monomere IIIa)

$b_2$) 0,01 - 10 Gew.-% eines Monomers II

$b_3$) 0 - 10 Gew.-% eines Monomers IV,

wobei sich die Gew.-% $b_1$) - $b_3$) auf die Gesamtmenge (= 100 %) der in Stufe B eingesetzten Monomere beziehen,

C. anschließende zweistufige Pfropfpolymerisation mit

Variante C/1:

5 - 25 Gew.-% eines Monomerengemischs aus

$c_1$) 70 - 100 Gew.-% eines Monomeren I

$c_2$) 0 - 30 Gew.-% eines Monomeren III

$c_3$) 0 - 5 Gew.-% eines Monomeren IV

in der 1. Stufe und

5 - 25 Gew.-% eines Monomerengemischs aus

$c_4$) 70 - 100 Gew.-% eines $C_1$-$C_{12}$-Alkylesters der Methacrylsäure (III b)

$c_5$) 0 - 30 Gew.-% eines weiteren Monomeren III

$c_6$) 0 - 5 Gew.-% eines Monomeren IV

in der 2. Stufe

oder

Variante C/2:

5 - 25 Gew.-% eines Monomerengemischs aus

$c_7$) 70 - 100 Gew.-% eines Monomeren b

$c_8$) 0 - 30 Gew.-% eines weiteren Monomeren III

$c_9$) 0 bis 5 Gew.-% eines Monomeren IV

in der 1. Stufe und

5 - 25 Gew.-% eines Monomerengemischs aus

$c_{10}$) 70 - 100 Gew.-% eines Monomeren I

$c_{11}$) 0 - 30 Gew.-% eines Monomeren III

$c_{12}$) 0 - 5 Gew.-% eines Monomeren IV

in der 2. Stufe

oder

Variante C/3:

5 - 25 Gew.-% eines Monomerengemischs aus

$c_{13}$) 70 - 100 Gew.-% eines Monomeren I

$c_{14}$) 0 - 30 Gew.-% eines Monomeren III

$c_{14}$) 0 - 15 Gew.-% eines Monomeren IV

in der 1. Stufe und

5 - 25 Gew.-% eines Monomerengemischs aus

$c_{16}$) 50 - 90 Gew.-% eines Monomeren I

$c_{17}$) 5 - 40 Gew.-% eines $\alpha,\beta$-ungesättigten Nitrils (Monomere VI)

$c_{18}$) 0 - 30 Gew.-% eines Monomeren III

$c_{19}$) 0 - 5 Gew.-% eines Monomeren IV

in der 2. Stufe

oder

Variante C/4:

5 - 25 Gew.-% eines Monomerengemischs aus

$c_{20}$) 50 - 90 Gew.-% eines Monomeren I

$c_{21}$) 5 - 40 Gew.-% eines Monomeren VI

$c_{22}$) 0 - 30 Gew.-% eines Monomeren III

$c_{23}$) 0 - 5 Gew.-% eines Monomeren IV

in der 1. Stufe und

5 - 25 Gew.-% eines Monomerengemischs aus

$c_{24}$) 70 - 100 Gew.-% eines Monomeren I

$c_{25}$) 0 - 30 Gew.-% eines Monomeren III

$c_{26}$) 0 - 5 Gew.-% eines Monomeren IV

in der 2. Stufe,

wobei sich die Gew.-% $C_1$) - $C_{26}$) jeweils auf die Gesamtmenge (= 100 %) der in jeder Stufe eingesetzten Monomere beziehen.

Weiterhin betrifft die Erfindung Verfahren zur Herstellung dieser Polymerisate, ihre Verwendung als Zusatzstoffe zur Verbesserung der Schlagzähigkeit von Vinylhalogenidpolymeren und thermoplastische Formmassen aus Polyvinylhalogeniden, welche die definionsgemäßen Polymerisate enthalten.

Um die Anwendungsbreite von Vinylhalogenidharzmassen, vor allem von PVC, zu erweitern, werden den Harzen Modifizierungsmittel zugesetzt, die Verbesserungen bezüglich der Transparenz, Witterungsbeständigkeit und Schlagzähigkeit bewirken sollen.

In der DE-A-24 38 402 und der DE-A-22 49 023 werden als Modifizierungsmittel dreistufige Pfropfpolymere beschrieben, bei deren Herstellung auf ein Grundgerüst aus Acrylatkautschuk zunächst eine Hülle aus Methylmethacrylat aufgepfropft wird, woran sich eine Copolymerisation mit Styrol anschließt.

Die EP 50 848 und die US-A-4 064 197 betreffen dreistufige Pfropfpolymere, auf deren harten Kern aus Polystyrol zunächst ein Dienkautschuk und anschließend eine Hülle aus Alkylmethacrylat aufgepfropft wird.

Weiterhin sind aus der DE-A-22 44 519, der DE-A-21 30 989, der US-A-3 971 835 und der US-A-4 145 380 Pfropfpolymere bekannt, bei denen ein Polystyrolkern zunächst von einer Hülle aus Acrylatkautschuk umgeben ist, worauf dann in der dritten Stufe Methylmethacrylat aufgepfropft wird.

In der DE-A-25 57 828 und der US-A-4 128 605 sind als Modifizierungsmittel vierstufige Pfropfpolymere beschrieben, deren harter Polystyrolkern ebenfalls von einem Acrylatkautschuk umgeben ist, wobei beide Stufen in Gegenwart eines allylgruppenhaltigen Vernetzers polymerisiert werden. Es schließen sich zwei Pfropfstufen an, in denen zuerst Methylmethacrylat und dann Styrol aufgepfropft werden.

Alle bisher beschriebenen Pfropfpolymere sind als Modifizierungsmittel für thermoplastische Formmassen aus Vinylhalogenidharzen zu verwenden. Jedoch weisen die so erhaltenen Formmassen teilweise ein ungünstiges Weißbruchverhalten auf, oder sie lassen hinsichtlich der Schlagzähigkeit zu wünschen übrig.

Aufgabe der vorliegenden Erfindung war es, diesen Mängeln abzuhelfen.

Demgemäß wurden die eingangs definierten Emulsionspolymerisate gefunden. Weiterhin wurden die hierdurch definierten Verfahren zur Herstellung dieser Polymerisate gefunden, sowie ihre Verwendung als Modifizierungs-mittel in thermoplastischen Formmassen aus Vinylchloridpolymeren.

Die erfindungsgemäßen Emulsionscopolymerisate sind über die Stufen A) - C) erhältlich und unterscheiden sich etwas, je nachdem welche Variante von C) angewandt wird.

Die folgenden Vorschriften und Empfehlungen betreffen die einzelnen Stufen.

Stufe A

Als Monomere I eignen sich vor allem Styrol, sowie dessen ein- oder mehrfach ringsubstituierte Derivate, beispielsweise 4-Methylstyrol. Es ist auch möglich, ein Gemisch verschiedener Monomere I einzusetzen. Die Menge an Monomer I beträgt 50 - 99,99 Gew.-%, vorzugsweise 70 - 99 Gew.-%, bezogen auf die Gesamtmenge an Monomeren in der Stufe A).

Geeignete aliphatische konjugierte Diene (Monomere II) sind vorzugsweise solche mit 4 - 6 C-Atomen, beispielsweise Isopren, Chloropren oder Butadien. An Dien werden 0,01 - 5 Gew.-%, vorzugsweise 1 - 4 Gew.-%, bezogen auf die Gesamtmenge der in Stufe A) verwendeten Monomere, eingesetzt.

Zusätzlich können noch 0 - 49,99 Gew.-% eines $C_1$-$C_{12}$-Alkylesters der Acrylsäure oder der Methacrylsäure (Monomere III) copolymerisiert werden. Geeignete Monomere III sind beispielsweise i-Butylacrylat, Methylacrylat, Methylmethacrylat oder Ethylmethacrylat .

Außerdem können noch 0 - 10 Gew.-% eines nicht konjugierten, bi- oder polyfunktionellen Monomeren IV zugesetzt werden, beispielsweise Acryl- oder Methacrylsäureester mehrwertiger Alkohole wie 1,4-Butandioldiacrylat oder Polyvinylether mehrwertiger Alkohole wie Butandioldivinylether.

Daneben können noch 0 - 5 Gew.-% weiterer radikalisch polymerisierbarer Monomere VI copolymerisiert werden, beispielsweise Acrylnitril oder Methacrylnitril.

EP 0 379 086 B1

Die Polymerisation kann unter den für Emulsionspolymerisationen üblichen Bedingungen der radikalischen Polymerisation durchgeführt werden.

Als Initiatoren können wasserlösliche thermisch zerfallende Initiatoren oder Redoxsysteme eingesetzt werden. Geeignete thermisch zerfallende Initiatoren (Radikalstarter) sind beispielsweise Natriumpersulfat oder Ammoniumpersulfat. Als Redoxinitiatoren kommen Systeme wie Wasserstoffperoxid-Eisen-II-chlorid oder t-Butylhydroperoxid-Natriumformaldehydsulfoxylat in Betracht.

Die polymerisationstemperatur liegt im allgemeinen zwischen 20 - 95, vorzugsweise zwischen 40 - 80 °C.

Als Emulgatoren eignen sich anionische Emulgatoren, beispielsweise Alkalisalze von Fettsäuren wie Natriumlaurat oder auch Natriumalkylsulfonate, kationische Emulgatoren wie z.B. quaternäre Ammoniumsalze mit langkettigen Alkylresten oder nicht ionische Emulgatoren, beispielsweise Poly(oxyethylen).

Außerdem können noch Molgewichtsregler zugesetzt werden. Als Molgewichtsregler kommen aliphatische und aromatische Mercaptane wie Thiophenol oder t-Dodecylmercaptan, aber auch Thioester in Betracht.

Man kann die Polymerisation bei 1 - 40, vorzugsweise bei 1 - 20 bar, vornehmen. Es empfiehlt sich, unter einer Stickstoffatmosphäre zu arbeiten.

Vorzugsweise wendet man eine diskontinuierliche Fahrweise an, aber es ist auch möglich, bei kontinuierlicher Fahrweise in einer Rührkesselkaskade zu arbeiten.

Stufe B

In Gegenwart der Polymerisationsemulsion der 1. Stufe wird nun ein Acrylat oder eine Mischung verschiedener Acrylate und eine kleine Menge eines konjugierten Diens aufgepfropft. Als Acrylate kommen $C_1$-$C_{12}$-Alkylester der Acrylsäure in Betracht, beispielsweise n-Butylacrylat, 2-Ethyl-hexylacrylat, sowie weiterhin die Ester von $C_2$-$C_8$-Mono- oder Polyglykolmonoethern wie Ethylglykolacrylat oder Methyldiethylglykolacrylat.

Die Menge an Acrylat wird so bemessen, daß sie 80 - 99,99, vorzugsweise 90 - 99,5 Gew.-% der Gesamtmenge der in Stufe B eingesetzten Monomere beträgt.

Als aliphatische, konjugierte Diene kommen beispielsweise Isopren, Chloropren oder Butadien in Betracht. Die Menge an Dien beträgt 0,01 - 5, vorzugsweise 1 - 3 Gew.-%, bezogen auf die Gesamtmenge der in Stufe B eingesetzten Monomeren.

Zusätzlich können 0 - 10 Gew.-% eines Monomers IV copolymerisiert werden, beispielsweise Acryl- oder Methacrylsäureester mehrwertiger Alkohole wie Butandioldiacrylat oder Trimethylolpropantriacrylat.

Im übrigen kann man die Polymerisation unter den in Stufe A geschilderten Bedingungen durchführen.

Das so erhaltene Polymerisat hat eine Glastemperatur von -60 - 0, vorzugsweise von -50 - -10 °C.

Stufe C

Anschließend erfolgt eine zweistufige pfropfpolymerisation in Gegenwart der in Stufe B erhaltenen Polymerisationsemulsion. Dabei können je nach Variante c/1 - c/4) unterschiedliche Monomere bzw. Monomerengemische verwendet werden.

Variante c/1:

In der ersten Stufe werden 70 - 100 Gew.-% eines Monomers I mit 0 - 5 Gew.-% eines bi- oder polyfunktionellen, nicht konjugierten Monomers IV copolymerisiert.

Als Monomer I kommen vorzugsweise Styrol, oder auch dessen kernsubstituierte Derivate in Betracht.

Zusätzlich können nach 0 - 30 Gew.-% eines Monomers III copolymerisiert werden.

In der zweiten Stufe werden 70 - 100 Gew.-% von $C_1$-$C_{12}$-Alkylestern der Methacrylsäure (IIIb) und 0 - 5 Gew.-% eines Monomers IV copolymerisiert. Geeignete Methacrylsäureester sind beispielsweise Ethylmethacrylat, vorzugsweise Methylmethacrylat. Als Monomer IV können beispielsweise Butandioldivinylether oder vorzugsweise 1,4-Butandioldiacrylat verwendet werden.

Daneben können noch 0 - 30 Gew.-% eines weiteren Monomeren III copolymerisiert werden.

Variante c/2:

In dieser Variante werden in der ersten Stufe 70 - 100 Gew.-% eines Methacrylsäureesters (IIIb) und 0 - 5 Gew.-% eines Monomers IV eingesetzt. Geeignete Monomere sind unter c/1, 2. Stufe, beschrieben.

4

Daneben können noch 0 - 30 Gew.-% eines Monomeren III werden copolymerisiert.

In der zweiten Stufe werden 70 - 100 Gew.-% eines Monomers I aufgepfropft. Zusätzlich können 0 - 30 Gew.-% eines Monomeren III copolymerisiert werden.

Als Monomere I und IV kommen die unter c/1 beschriebenen in Betracht.

Variante c/3:

In der ersten Stufe werden 70 - 100 Gew.-%, eines Monomers I, vorzugsweise Styrol, zugegeben. Zusätzlich können 0 - 5 Gew.-% eines Monomeren IV und 0 - 30 Gew.-% eines Monomeren III copolymerisiert werden.

In der zweiten Stufe werden 50 - 90 Gew.-% Monomer I, 5 - 40 Gew.-% eines $\alpha,\beta$-ungesättigtes Nitrils (Monomere VI), bevorzugt Acrylnitril, copolymerisiert. Daneben können 0 - 30 Gew.-% eines Monomeren III und 0 - 5 Gew.-% eines Monomeren IV copolymerisiert werden.

Variante c/4:

In dieser Variante wird die Reihenfolge der unter c/4 beschriebenen Stufen umgekehrt.

Die Polymerisationsstufen können unter den für Stufe (A) geschilderten Bedingungen vorgenommen werden.

Durch die Wahl des Emulgators, seine Konzentration (0,1 - 5 Gew.-%) und die Art der Zugabe der einzelnen Komponenten in den Polymerisationskessel kann die mittlere Teilchengröße so eingestellt werden, daß sie zwischen 50 und 300 nm liegt.

Der Gelgehalt der erfindungsgemäßen Pfropfpolymerisate liegt üblicherweise im Bereich von 80 - 100 %.

Die Aufarbeitung der Polymerisationsemulsion erfolgt nach üblichen Verfahren, z.B. durch Koagulation und Trocknung oder durch Sprühtrocknung.

Die Herstellung der Polyvinylhalogenidformmassen kann nach bekannten Verfahren erfolgen.

Die thermoplastischen Formmassen können neben den 2 - 40 Gew.-% des erfindinngsgemäßen Emulsionscopolymerisates noch die üblichen Stabilisatoren, Verarbeitungshilfsmittel oder Farbstoffe enthalten.

Die erfindinngsgemäßen thermoplastischen Formmassen weisen eine ausgezeichnete Transparenz, Witterungsbeständigkeit und eine verbesserte Schlagzähigkeit auf.

Beispiel 1

Ein Gemisch aus 3700 g destilliertem Wasser, 45,2 g einer 40 gew.-%igen Lösung von Natriumsalzen eines Gemisches von $C_1$-$C_{12}$-Alkylsulfonaten, 2,26 g Natriumpyrophosphat und 2,26 g Natriumpersulfat wurde unter einer Stickstoffatmosphäre auf 70 °C erhitzt.

Dazu wurden innerhalb einer Stunde 886 g Styrol und 18 g Butadien gegeben. Anschließend wurde noch 30 min lang nachpolymerisiert.

Zu der so erhaltenen Polymerisationsemulsion wurden während einer Zeitspanne von einer Stunde 976 g n-Butylacrylat, 27 g Butadien sowie eine Lösung von 2 g Natriumpersulfat in 200 g destilliertem Wasser zugegeben. Die Polymerisation wurde noch 30 min fortgesetzt, dann wurde die Polymerisationsemulsion mit einem Gemisch aus 100 g destilliertem Wasser, 7,3 g Natriumpersulfat und 22,3 g einer 40 gew.-%igen Lösung von Natriumsalzen eines Gemisches von $C_8$-$C_{12}$-Alkylsulfonaten versetzt.

Danach wurden 400 g Methylmethacrylat und 4,2 g 1,4-Butandioldiacrylat innerhalb einer Stunde zugegeben. Anschließend wurde noch 30 min lang nachpolymerisiert, dann wurden 400 g Styrol und 4,2 g 1,4-Butandioldiacrylat innerhalb von 30 min zugegeben.

Die Emulsionscopolymerisate wurden durch Gefrierkoagulation und Trocknen gewonnen.

Die Zusammensetzung der Modifizierungsmittel und die Ergebnisse der Schlagzähigkeitsversuche sind in der nachfolgenden Tabelle aufgelistet.

Beispiele 2 und 3

Analog Beispiel 1 wurden weitere Emulsionscopolymerisate hergestellt;
Zusammensetzung s. Tabelle.
Vergleichsbeispiel
Zusammensetzung s. Tabelle.

Herstellung von thermoplastischen Formmassen
90 g PVC, K-Wert 60
10 g Modifizierungsmittel (Bsp. 1, 2, 3)
1 g Stabilisator (Di-n-octylzinn-bis-thioglycolsäureisooctylester)
0,3 g Glycerindioleat
wurden 8 min bei 170 °C in einem Walzwerk gemischt. Die so erhaltenen Mischungen wurden bei 180 °C unter folgenden Bedingungen zu Platten gepreßt:

| 3 min | vorheizen | bei 50 bar |
|---|---|---|
| 2 - 3 min | pressen | bei 200 bar |
| 3 min | kühlen | bei 200 bar. |

Die Prüfkörper wurden aus 4 mm dicken Platten gewonnen. Es wurde die Doppel-V-Schlagzähigkeit nach DIN 53 753 und die Schlagzähigkeit nach ISO 180/1 A (Izod) bestimmt. Ergebnisse s. Tabelle.

Die erfindungsgemäßen Formmassen (Bsp. 1, 2, 3) weisen gegenüber dem Vergleichsbeispiel eine deutlich bessere Schlagzähigkeit nach ISO 180/1 A auf.

Bei tieferen Temperaturen wurden auch bei der Doppel-V-Schlagzähigkeit bessere Ergebnisse erzielt.

Tabelle

| Beispiel | A 33,5 Gew.-T. | | B 36,5 Gew.-T. | | C 15 Gew.-T. | | D 15 Gew.-T. | | Doppel-V DIN 53 753 [kJ/m²] | | | Izod ISO 180/1A [kJ/m²] | | |
|---|---|---|---|---|---|---|---|---|---|---|---|---|---|---|
| | Gew.-% | | Gew.-% | | Gew.-% | | Gew.-% | | -10°C | 0°C | 23°C | 10 %* | 12,5 %* | 15 %* |
| 1 | 98 | S | 97 | BA | 99 | MMA | 99 | S | 18,0 | 31,0 | 52,0 | 17,7 | 56,8 | 61,1 T |
| | 2 | Bu | 3 | Bu | 1 | BDAII | 1 | BDAII | | | | | | |
| 2 | 98 | S | 97 | BA | 99 | S | 99 | MMA | 20,0 | 27,0 | 44,0 | 13,1 | 50,8 | 66,4 T |
| | 2 | Bü | 3 | Bu | 1 | BDAII | 1 | BDAII | | | | | | |
| 3 | 98 | S | 99 | BA | 99 | MMA | 99 | S | 15,0 | 28,0 | 50,0 | 16,1 | 67,0 T | 78,0 T |
| | 2 | Bu | 1 | Bu | 1 | BDAII | 1 | BDAII | | | | | | |
| Ver-gleichs-beispiel | 98 | S | 99 | BA | 99 | MMA | 99 | S | 11,0 | 26,7 | 50,0 | 16,2 | 19,1 | 46,0 |
| | 2 | TAc | 1 | TAc | 1 | TAc | | | | | | | | |

* : Gew.-% Pfropfpolymer
T : Teilbruch

BA:     n-Butylacrylat
BDAII: 1,4-Butandioldiacrylat
Bu:     Butadien
MMA:    Methylmethacrylat
S:      Styrol
TAc:    Triallylcyanurat

**Patentansprüche**
**Patentansprüche für folgende Vertragsstaaten : BE, DE, FR, GB, IT, NL, SE**

1.   Emulsionscopolymerisate, erhältlich durch

      A. Emulsionspolymerisation von 5 - 50 Gew.-% eines Monomerengemischs aus

         $a_1$) 50 - 99,99 Gew.-% Styrol oder dessen kernsubstituierten Derivaten (Monomere I)

         $a_2$) 0,01 - 5 Gew.-% eines aliphatischen konjugierten Diens mit bis zu 6 C-Atomen (Monomere II)

         $a_3$) 0 - 49,99 Gew.-% eines $C_1$-$C_{12}$-Alkylesters der Acrylsäure oder der Methacrylsäure (Monomere III)

         $a_4$) 0 - 10 Gew.-% eines bi- oder polyfunktionellen nicht konjugierten Monomeren (Monomere IV)

         $a_5$) 0 - 5 Gew.-% weiterer radikalisch polymerisierbarer Monomere (Monomere V)

      wobei sich die Gew.-% $a_1$) - $a_5$) auf die Gesamtmenge (= 100 %) der in Stufe A eingesetzten Monomere beziehen,

      B. anschließende Polymerisation von 15 - 45 Gew.-% eines Monomerengemischs aus

         $b_1$) 80 - 99,99 Gew.-% eines Acrylsäureesters (Monomere IIIa)

         $b_2$) 0,01 - 5 Gew.-% eines Monomers II

         $b_3$) 0 - 10 Gew.-% eines Monomers IV

      wobei sich die Gew.-% $b_1$) - $b_3$) auf die Gesamtmenge der in Stufe B eingesetzten Monomere beziehen,

      in Gegenwart der in A. hergestellen Polymerisationsemulsion,

      C. anschließende zweistufige Pfropfpolymerisation mit

      Variante C/1:

      5 - 25 Gew.-% eines Monomerengemischs aus

         $c_1$) 70 - 100 Gew.-% eines Monomeren I

         $c_2$) 0 - 30 Gew.-% eines Monomeren III

         $c_3$) 0 - 5 Gew.-% eines Monomeren IV

      in der 1. Stufe und

      5 - 25 Gew.-% eines Monomerengemischs aus

         $c_4$) 70 - 100 Gew.-% eines $C_1$-$C_{12}$-Alkylesters der Methacrylsäure (III b)

         $c_5$) 0 - 30 Gew.-% eines weiteren Monomeren III

         $c_6$) 0 - 5 Gew.-% eines Monomeren IV

      in der 2. Stufe

      oder

      Variante C/2:

      5 - 25 Gew.-% eines Monomerengemischs aus

         $c_7$) 70 - 100 Gew.-% eines Monomeren III b

         $c_8$) 0 - 30 Gew.-% eines weiteren Monomeren III

         $c_9$) 0 - 5 Gew.-% eines Monomeren IV

      in der 1. Stufe und

      5 - 25 Gew.-% eines Monomerengemischs aus

         $c_{10}$) 70 - 100 Gew.-% eines Monomeren I

         $c_{11}$) 0 - 30 Gew.-% eines Monomeren III

         $c_{12}$) 0 - 5 Gew.-% eines Monomeren IV

      in der 2. Stufe

      oder

      Variante C/3:

      5 - 25 Gew.-% eines Monomerengemischs aus

         $c_{13}$) 70 - 100 Gew.-% eines Monomeren I

         $c_{14}$) 0 - 30 Gew.-% eines Monomeren III

         $c_{15}$) 0 - 5 Gew.-% eines Monomeren IV

      in der 1. Stufe und

      5 - 25 Gew.-% eines Monomerengemischs aus

         $c_{16}$) 50 - 90 Gew.-% eines Monomeren I

         $c_{17}$) 5 - 40 Gew.-% eines $\alpha,\beta$-ungesättigten Nitrils (Monomere VI)

         $c_{18}$) 0 - 30 Gew.-% eines Monomeren III

         $c_{19}$) 0 - 5 Gew.-% eines Monomeren IV

      in der 2. Stufe

      oder

Variante C/4:

5 - 25 Gew.-% eines Monomerengemischs aus

$c_{20}$) 50 - 90 Gew.-% eines Monomeren I

$c_{21}$) 5 - 40 Gew.-% eines Monomeren VI

$c_{22}$) 0 - 30 Gew.-% eines Monomeren III

$c_{23}$) 0 - 5 Gew.-% eines Monomeren IV

in der 1. Stufe und

5 - 25 Gew.-% eines Monomerengemischs aus

$c_{24}$) 70 - 100 Gew.-% eines Monomeren I

$c_{25}$) 0 - 30 Gew.-% eines Monomeren III

$c_{26}$) 0 - 5 Gew.-% eines Monomeren IV

in der 2. Stufe,

wobei sich die Gew.-% $C_1$) - $C_{26}$) jeweils auf die Gesamtmenge (= 100 %) der in jeder Stufe eingesetzten Monomere beziehen,

in Gegenwart der nach B. erhaltenen Polymerisationsemulsion.

2.    Verfahren zur Herstellung von Emulsionscopolymerisaten gemäß Anspruch 1, dadurch gekennzeichnet, daß man sie gemäß den in Anspruch 1 genannten Maßnahmen vornimmt.

3.    Verwendung der Emulsionscopolymerisate gemäß Anspruch 1 als Zusatzstoffe in Polyvinylhalogenidharzmassen zur Verbesserung der Schlagzähigkeit.

4.    Thermoplastische Formmassen aus Polyvinylhalogeniden, enthaltend 2 bis 40 Gew.-% der Emulsionscopolymerisate gemäß Anspruch 1.

**Patentansprüche für folgenden Vertragsstaat : ES**

1.    Verfahren zur Herstellung von Emulsionscopolymerisaten, dadurch gekennzeichnet, daß man

A. eine Emulsionspolymerisation mit 5 - 50 Gew.-% eines Monomerengemischs aus

$a_1$) 50 - 99,99 Gew.-% Styrol oder dessen kernsubstituierten Derivaten (Monomere I)

$a_2$) 0,01 - 5 Gew.-% eines aliphatischen konjugierten Diens mit bis zu 6 C-Atomen (Monomere II)

$a_3$) 0 - 49,99 Gew.-% eines $C_1$-$C_{12}$-Alkylesters der Acrylsäure oder der Methacrylsäure (Monomere III)

$a_4$) 0 - 10 Gew.-% eines bi- oder polyfunktionellen nicht konjugierten Monomeren (Monomere IV)

$a_5$) 0 - 5 Gew.-% weiterer radikalisch polymerisierbarer Monomere (Monomere V)

wobei sich die Gew.-% $a_1$) - $a_5$) auf die Gesamtmenge (= 100 %) der in Stufe A eingesetzten Monomere beziehen, durchführt,

B. anschließend in Gegenwart des nach A. erhaltenen Latex 15 - 45 Gew.-% eines Monomerenge-mischs aus

$b_1$) 80 - 99,99 Gew.-% eines Acrylsäureesters (Monomere IIIa)

$b_2$) 0,01 - 10 Gew.-% eines Monomers II

$b_3$) 0 - 10 Gew.-% eines Monomers IV

wobei sich die Gew.-% $b_1$) - $b_3$) auf die Gesamtmenge der in Stufe B. eingesetzten Monomere beziehen, polymerisiert und

C. anschließend eine zweistufige Pfropfpolymerisation mit

Variante C/1:

5 - 25 Gew.-% eines Monomerengemischs aus

$c_1$) 70 - 100 Gew.-% eines Monomeren I

$c_2$) 0 - 30 Gew.-% eines Monomeren III

$c_3$) 0 - 5 Gew.-% eines Monomeren IV

in der 1. Stufe und

5 - 25 Gew.-% eines Monomerengemischs aus

$c_4$) 70 - 100 Gew.-% eines $C_1$-$C_{12}$-Alkylesters der Methacrylsäure (III b)

$c_5$) 0 - 30 Gew.-% eines weiteren Monomeren III

$c_6$) 0 - 5 Gew.-% eines Monomeren IV

in der 2. Stufe

oder

Variante C/2:

9

5 - 25 Gew.-% eines Monomerengemischs aus

$c_7$) 70 - 100 Gew.-% eines Monomeren III b

$c_8$) 0 - 30 Gew.-% eines weiteren Monomeren III

$c_9$) 0 - 5 Gew.-% eines Monomeren IV

in der 1. Stufe und

5 - 25 Gew.-% eines Monomerengemischs aus

$c_{10}$) 70 - 100 Gew.-% eines Monomeren I

$c_{11}$) 0 - 30 Gew.-% eines Monomeren III

$c_{12}$) 0 - 5 Gew.-% eines Monomeren IV

in der 2. Stufe

oder

Variante C/3:

5 - 25 Gew.-% eines Monomerengemischs aus

$c_{13}$) 70 - 100 Gew.-% eines Monomeren I

$c_{14}$) 0 - 30 Gew.-% eines Monomeren III

$c_{15}$) 0 - 5 Gew.-% eines Monomeren IV

in der 1. Stufe und

5 - 25 Gew.-% eines Monomerengemischs aus

$c_{16}$) 50 - 90 Gew.-% eines Monomeren I

$c_{17}$) 5 - 40 Gew.-% eines $\alpha,\beta$-ungesättigten Nitrils (Monomere VI)

$c_{18}$) 0 - 30 Gew.-% eines Monomeren III

$c_{19}$) 0 - 5 Gew.-% eines Monomeren IV

in der 2. Stufe

oder

Variante C/4:

5 - 25 Gew.-% eines Monomerengemischs aus

$c_{20}$) 50 - 90 Gew.-% eines Monomeren I

$c_{21}$) 5 - 40 Gew.-% eines Monomeren VI

$c_{22}$) 0 - 30 Gew.-% eines Monomeren III

$c_{23}$) 0 - 5 Gew.-% eines Monomeren IV

in der 1. Stufe und

5 - 25 Gew.-% eines Monomerengemischs aus

$c_{24}$) 70 - 100 Gew.-% eines Monomeren I

$c_{25}$) 0 - 30 Gew.-% eines Monomeren III

$c_{26}$) 0 - 5 Gew.-% eines Monomeren IV

in der 2. Stufe,

wobei sich die Gew.-% $C_1$) - $C_{26}$) jeweils auf die Gesamtmenge (= 100 %) der in jeder Stufe eingesetzten Monomere beziehen, in Gegenwart des nach B. erhaltenen Latex durchführt.

2. Verfahren zur Herstellung von Polyvinylhalogenidharzmassen, dadurch gekennzeichnet, daß man Emulsionscopolymerisate gemäß Anspruch 1 als Zusatzstoffe zur Verbesserung der Schlagzähigkeit verwendet.

3. Verfahren zur Herstellung von thermoplastischen Formmassen aus Polyvinylhalogeniden, dadurch gekennzeichnet, daß man 2 bis 40 Gew.-% der Emulsionscopolymerisate gemäß Anspruch 1 verwendet.

**Claims**

**Claims for the following Contracting States : BE, DE, FR, GB, IT, NL, SE**

1. An emulsion copolymer obtainable by

A. emulsion polymerization of 5-50% by weight of a monomer mixture of

$a_1$) 50-99.99% by weight of styrene or its derivatives which are substituted in the nucleus (monomers I),

$a_2$) 0.01-5% by weight of an aliphatic conjugated diene of not more than 6 carbon atoms (monomers II),

$a_3$) 0-49.99% by weight of a $C_1$-$C_{12}$-alkyl ester of acrylic acid or of methacrylic acid (monomers III),

EP 0 379 086 B1

$a_4$) 0-10% by weight of a bifunctional or polyfunctional nonconjugated monomer (monomers IV) and

$a_5$) 0-5% by weight of further monomers capable of free radical polymerisation (monomers V),

the percentages by weight $a_1$) - $a_5$) being based on the total amount (= 100%) of the monomers used in stage A,

B. subsequent polymerization of 15-45% by weight of a monomer mixture of

$b_1$) 80-99.99% by weight of an acrylate (monomers IIIa),

$b_2$) 0.01-5% by weight of a monomer II and

$b_3$) 0-10% by weight of a monomer IV,

the percentages by weight $b_1$) - $b_3$) being based on the total amount of the monomers used in stage B,

in the presence of the polymerization emulsion prepared in A,

C. subsequent two-stage graft polymerization with variant C/1:

5-25% by weight of a monomer mixture of

$c_1$) 70-100% by weight of a monomer I,

$c_2$) 0-30% by weight of a monomer III and

$c_3$) 0-5% by weight of a monomer IV in the first stage and

5-25% by weight of a monomer mixture of

$c_4$) 70-100% by weight of a $C_1$-$C_{12}$-alkyl ester of methacrylic acid (IIIb),

$c_5$) 0-30% by weight of a further monomer III and

$c_6$) 0-5% by weight of a monomer IV

in the second stage

or

variant C/2:

5-25% by weight of a monomer mixture of

$c_7$) 70-100% by weight of a monomer IIIb,

$c_8$) 0-30% by weight of a further monomer III and

$c_9$) 0-5% by weight of a monomer IV

in the first stage and

5-25% by weight of a monomer mixture of

$c_{10}$) 70-100% by weight of a monomer I,

$c_{11}$) 0-30% by weight of a monomer III and

$c_{12}$) 0-5% by weight of a monomer IV

in the second stage

or

variant C/3:

5-25% by weight of a monomer mixture of

$c_{13}$) 70-100% by weight of a monomer I,

$c_{14}$) 0-30% by weight of a monomer III and

$c_{15}$) 0-5% by weight of a monomer IV

in the first stage and

5-25% by weight of a monomer mixture of

$c_{16}$) 50-90% by weight of a monomer I,

$c_{17}$) 5-40% by weight of an $\alpha,\beta$-unsaturated nitrile (monomers VI),

$c_{18}$) 0-30% by weight of a monomer III and

$c_{19}$) 0-5% by weight of a monomer IV

in the second stage

or

variant C/4:

5-25% by weight of a monomer mixture of

$c_{20}$) 50-90% by weight of a monomer I,

$c_{21}$) 5-40% by weight of a monomer V,

$c_{22}$) 0-30% by weight of a monomer III and

$c_{23}$) 0-5% by weight of a monomer IV

in the first stage and

5-25% by weight of a monomer mixture of

$c_{24}$) 70-100% by weight of a monomer I,

$c_{25}$) 0-30% by weight of a monomer III and

$c_{26}$) 0-5% by weight of a monomer IV

in the second stage,

the percentages by weight $c_1$) - $c_{26}$) each being based on the total amount (= 100%) of the monomers used in each stage,

in the presence of the polymerization emulsion obtained according to B.

2. A process for the preparation of an emulsion copolymer as claimed in claim 1, which is carried out according to the measures stated in claim 1.

3. Use of an emulsion copolymer as claimed in claim 1 as an additive in polyvinyl halide resin materials for improving the impact strength.

4. A thermoplastic polyvinyl halide molding material, containing from 2 to 40% by weight of an emulsion copolymer as claimed in claim 1.

**Claims for the following Contracting State : ES**

1. A process for the preparation of an emulsion copolymer, which comprises carrying out

A. an emulsion polymerization with 5-50% by weight of a monomer mixture of

$a_1$) 50-99.99% by weight of styrene or its derivatives which are substituted in the nucleus (monomers I),

$a_2$) 0.01-5% by weight of an aliphatic conjugated diene of not more than 6 carbon atoms (monomers II),

$a_3$) 0-49.99% by weight of a $C_1$-$C_{12}$-alkyl ester of acrylic acid or of methacrylic acid (monomers III),

$a_4$) 0-10% by weight of a bifunctional or polyfunctional nonconjugated monomer (monomers IV) and

$a_5$) 0-5% by weight of further monomers capable of free radical polymerization (monomers V),

the percentages by weight $a_1$) - $a_5$) being based on the total amount (= 100%) of the monomers used in stage A,

B. subsequently polymerizing of 15-45% by weight of a monomer mixture of

$b_1$) 80-99.99% by weight of an acrylate (monomers IIIa),

$b_2$) 0.01-5% by weight of a monomer II and

$b_3$) 0-10% by weight of a monomer IV,

the percentages by weight $b_1$) - $b_3$) being based on the total amount of the monomers used in stage B,

in the presence of the latex obtained according to A, and

C. subsequently carrying out a two-stage graft polymerization with

variant C/1:

5-25% by weight of a monomer mixture of

$c_1$) 70-100% by weight of a monomer I,

$c_2$) 0-30% by weight of a monomer III and

$c_3$) 0-5% by weight of a monomer IV

in the first stage and

5-25% by weight of a monomer mixture of

$c_4$) 70-100% by weight of a $C_1$-$C_{12}$-alkyl ester of methacrylic acid (IIIb),

$c_5$) 0-30% by weight of a further monomer III and

$c_6$) 0-5% by weight of a monomer IV

in the second stage

or

variant C/2:

5-25% by weight of a monomer mixture of

$c_7$) 70-100% by weight of a monomer IIIb,

$c_8$) 0-30% by weight of a further monomer III and

$c_9$) 0-5% by weight of a monomer IV

in the first stage and

5-25% by weight of a monomer mixture of

$c_{10}$) 70-100% by weight of a monomer I,

12

EP 0 379 086 B1

$c_{11}$) 0-30% by weight of a monomer III and
$c_{12}$) 0-5% by weight of a monomer IV
in the second stage
or
variant C/3:
5-25% by weight of a monomer mixture of
$c_{13}$) 70-100% by weight of a monomer I,
$c_{14}$) 0-30% by weight of a monomer III and
$c_{15}$) 0-5% by weight of a monomer IV
in the first stage and
5-25% by weight of a monomer mixture of
$c_{16}$) 50-90% by weight of a monomer I,
$c_{17}$) 5-40% by weight of an $\alpha,\beta$-unsaturated nitrile (monomers VI),
$c_{18}$) 0-30% by weight of a monomer III and
$c_{19}$) 0-5% by weight of a monomer IV
in the second stage
or
variant C/4:
5-25% by weight of a monomer mixture of
$c_{20}$) 50-90% by weight of a monomer I,
$c_{21}$) 5-40% by weight of a monomer V,
$c_{22}$) 0-30% by weight of a monomer III and
$c_{23}$) 0-5% by weight of a monomer IV
in the first stage and
5-25% by weight of a monomer mixture of
$c_{24}$) 70-100% by weight of a monomer I,
$c_{25}$) 0-30% by weight of a monomer III and
$c_{26}$) 0-5% by weight of a monomer IV
in the second stage,
the percentages by weight $c_1$) - $c_{26}$) each being based on the total amount (= 100%) of the monomers used in each stage,
in the presence of the latex obtained according to B.

2. A process for the preparation of a polyvinyl halide resin material, wherein emulsion copolymers as claimed in claim 1 are used as additives for improving the impact strength.

3. A process for the preparation of a thermoplastic polyvinyl halide molding material, which comprises using from 2 to 40% by weight of an emulsion copolymer as claimed in claim 1.

**Revendications**
**Revendications pour les Etats contractants suivants : BE, DE, FR, GB, IT, NL, SE**

1. Copolymères en émulsion, obtenus par
   A. polymérisation en émulsion de 5 à 50% en poids d'un mélange de monomères constitué de
      $a_1$) 50 - 99,99% en poids de styrène ou de ses dérivés substitués sur le noyau (monomère I)
      $a_2$) 0,01 - 5% en poids d'un diène conjugué aliphatique ayant jusqu'a 6 atomes de carbone (monomère II)
      $a_3$) 0 - 49,99% en poids d'un ester d'alkyle en $C_1$-$C_{12}$ de l'acide acrylique ou de l'acide méthacrylique (monomère III)
      $a_4$) 0 - 10% en poids d'un monomère non conjugué bi- ou polyfonctionnel (monomère IV)
      $a_5$) 0 - 5% en poids d'autres monomères polymérisables par voie radicalaire (monomère V)
   les pourcentages en poids de $a_1$) - $a_5$) étant exprimés par rapport à la quantité totale (= 100%) des monomères introduits dans l'étape A,
   B. polymérisation subséquente de 15 - 45% en poids d'un mélange de monomères constitué de
      $b_1$) 80 - 99,99% en poids d'un ester de l'acide acrylique (monomère IIIa))
      $b_2$) 0,01 - 5% en poids d'un monomère II
      $b_3$) 0 - 10% en poids d'un monomère IV
   les pourcentages en poids de $b_1$) - $b_3$) étant exprimés par rapport à la quantité totale des

13

monomères introduits dans l'étape B,

en présence de l'émulsion de polymérisation obtenue à l'étape A,

C. polymérisation par greffage subséquente en deux étapes, en présence de l'émulsion de polymérisation obtenue à l'étape B, avec

selon une variante C/1 :

5 à 25% en poids d'un mélange de monomères constitué de

$c_1$) 70 - 100% en poids d'un monomère I

$c_2$) 0 - 30% en poids d'un monomère III

$c_3$) 0 - 5% en poids d'un monomère IV

dans la première étape et

5 - 25% en poids d'un mélange de monomères constitué de

$c_4$) 70 - 100% en poids d'un ester d'alkyle en $C_1$-$C_{12}$ de l'acide méthacrylique (III b)

$c_5$) 0 - 30% en poids d'un autre monomère III

$C_6$) 0 - 5% en poids d'un monomère IV

dans la seconde étape

ou

selon une variante C/2 :

5 - 25% en poids d'un mélange de monomères constitué de

$c_7$) 70 - 100% en poids d'un monomère IIIb

$c_8$) 0 - 30% en poids d'un autre monomère III

$c_9$) 0 - 5% en poids d'un monomère IV

dans la première étape et

5 - 25% en poids d'un mélange de monomères constitué de

$c_{10}$) 70 - 100% en poids d'un monomère I

$c_{11}$) 0 - 30% en poids d'un monomère III

$c_{12}$) 0 - 5% en poids d'un monomère IV

dans la seconde étape

ou

selon une variante C/3 :

5 - 25% en poids d'un mélange de monomères constitué de

$c_{13}$) 70 - 100% en poids d'un monomère I

$c_{14}$) 0 - 30% en poids d'un monomère III

$c_{15}$) 0 - 5% en poids d'un monomère IV

dans la première étape et

5 - 25% en poids d'un mélange de monomères constitué de

$C_{16}$) 50 - 90% en poids d'un monomère I

$C_{17}$) 5 - 40% en poids d'un nitrile $\alpha,\beta$-insaturé (monomère VI)

$C_{18}$) 0 - 30% en poids d'un monomère III

$C_{19}$) 0 - 5% en poids d'un monomère IV

dans la seconde étape

ou

selon une variante C/4 :

5 - 25% en poids d'un mélange de monomères constitué de

$C_{20}$) 50 - 90% en poids d'un monomère I

$C_{21}$) 5 - 40% en poids d'un monomère VI

$c_{22}$) 0 - 30% en poids d'un monomère III

$c_{23}$) 0 - 5% en poids d'un monomère IV

dans la première étape et

5 - 25% en poids d'un mélange de monomères constitué de

$c_{24}$) 70 - 100% en poids d'un monomère I

$c_{25}$) 0 - 30% en poids d'un monomère III

$c_{26}$) 0 - 5% en poids d'un monomère IV

dans la seconde étape,

les pourcentages en poids de $C_1$) - $C_{26}$) étant chaque fois exprimés par rapport à la quantité totale ( = 100%) des monomères introduits dans chaque étape.

2. Procédé de préparation de copolymères en émulsion selon la revendication 1, caractérisé en ce que l'on procède en suivant les opérations décrites dans la revendication 1.

**3.** Utilisation des copolymères en émulsion selon la revendication 1 comme additifs dans des compositions de résine de poly(halogénure de vinyle) pour l'amélioration de la résilience.

**4.** Matières thermoplastiques à mouler de poly(halogénure de vinyle), contenant 2 à 40% en poids de copolymère en émulsion selon la revendication 1.

**Revendications pour l'Etat contractant suivant : ES**

**1.** Procédé de préparation de copolymères en émulsion, caractérisé en ce que

A. l'on effectue une polymérisation en émulsion avec 5 - 50% en poids d'un mélange de monomères constitué de

$a_1$) 50 - 99,99% en poids de styrène ou de ses dérivés substitués sur le noyau (monomère I)

$a_2$) 0,01 - 5% en poids d'un diène conjugué aliphatique ayant jusqu'à 6 atomes de carbone (monomère II)

$a_3$) 0 - 49,99% en poids d'un ester d'alkyle en $C_1$-$C_{12}$ de l'acide acrylique ou de l'acide méthacrylique (monomère III)

$a_4$) 0 - 10% en poids d'un monomère bi- ou polyfonctionnel non conjugué (monomère IV)

$a_5$) 0 - 5% en poids d'autres monomères polymérisables par voie radicalaire (monomère V)

les pourcentages en poids de $a_1$) - $a_5$) étant exprimés par rapport à la quantité totale ( = 100%) des monomères introduits dans l'étape A,

B. l'on polymérise ensuite en présence du latex obtenu à l'étape A, 15 - 45% en poids d'un mélange de monomères constitué de

$b_1$) 80 - 99,99% en poids d'un ester de l'acide acrylique (monomère IIIa)

$b_2$) 0,01 - 10% en poids d'un monomère II

$b_3$) 0 - 10% en poids d'un monomère IV

les pourcentages an poids de $b_1$) - $b_3$) étant exprimés par rapport à la quantité totale des monomères introduits dans l'étape B, et

C. l'on effectue ensuite une polymérisation par greffage en deux étapes, en présence du latex obtenu à l'étape B, avec

selon une variante C/1 :

5 - 25% en poids d'un mélange de monomères constitué de

$c_1$) 70 - 100% en poids d'un monomère I

$c_2$) 0 - 30% en poids d'un monomère III

$c_3$) 0 - 5% en poids d'un monomère IV

dans la première étape et

5 - 25% en poids d'un mélange de monomères constitué de

$c_4$) 70 - 100% en poids d'un ester d'alkyle en $C_1$-$C_{12}$ de l'acide méthacrylique (III b)

$c_5$) 0 - 30% en poids d'un autre monomère III

$C_6$) 0 - 5% en poids d'un monomère IV

dans la seconde étape

ou

selon une variante C/2 :

5 - 25% en poids d'un mélange de monomères constitué de

$c_7$) 70 - 100% en poids d'un monomère IIIb

$c_8$) 0 - 30% en poids d'un autre monomère III

$c_9$) 0 - 5% en poids d'un monomère IV

dans la première étape et

5 - 25% en poids d'un mélange de monomères constitué de

$c_{10}$) 70 - 100% en poids d'un monomère I

$c_{11}$) 0 - 30% en poids d'un monomère III

$c_{12}$) 0 - 5% en poids d'un monomère IV

dans la seconde étape

ou

selon une variante C/3 :

5 - 25% en poids d'un mélange de monomères constitué de

$c_{13}$) 70 - 100% en poids d'un monomère I

$c_{14}$) 0 - 30% en poids d'un monomère III

$c_{15}$) 0 - 5% en poids d'un monomère IV

dans la première étape et

5 - 25% en poids d'un mélange de monomères constitué de

$C_{16}$) 50 - 90% en poids d'un monomère I

$C_{17}$) 5 - 40% en poids d'un nitrile $\alpha,\beta$-insaturé (monomère VI)

$C_{18}$) 0 - 30% en poids d'un monomère III

$C_{19}$) 0 - 5% en poids d'un monomère IV

dans la seconde étape

ou

selon une variante C/4 :

5 - 25% en poids d'un mélange de monomères constitué de

$C_{20}$) 50 - 90% en poids d'un monomère I

$C_{21}$) 5 - 40% en poids d'un monomère VI

$c_{22}$) 0 - 30% en poids d'un monomère III

$c_{23}$) 0 - 5% en poids d'un monomère IV

dans la première étape et

5 - 25% en poids d'un mélange de monomères constitué de

$c_{24}$) 70 - 100% en poids d'un monomère I

$c_{25}$) 0 - 30% en poids d'un monomère III

$c_{26}$) 0 - 5% en poids d'un monomère IV

dans la seconde étape,

les pourcentages en poids de $C_1$) - $C_{26}$) étant chaque fois exprimés par rapport à la quantité totale ( = 100%) des monomères introduits dans chaque étape.

2. Procédé de préparation de compositions de résine de poly(halogénure de vinyle), caractérisé en ce que l'on utilise comme additifs pour l'amélioration de la résilience, des copolymères en émulsion selon la revendication 1.

3. Procédé de préparation de matières thermoplastiques à mouler de poly(halogénure de vinyle), caractérisé en ce que l'on utilise 2 à 40% en poids des copolymères en émulsion selon la revendication 1.